# FASCICULE DE BREVET EUROPEEN

(11) **EP 0 970 271 B1**
(45) Date de publication et mention de la délivrance du brevet: **14.11.2001**
(21) Numéro de dépôt: 98917227.5
(22) Date de dépôt: 25.03.1998
(51) Int. Cl.: D04H 3/04, F16D 69/02

(54) **PROCEDE DE REALISATION DE STRUCTURES FIBREUSES ANNULAIRES, NOTAMMENT POUR LA FABRICATION DE PIECES EN MATERIAU COMPOSITE**
VERFAHREN ZUR HERSTELLUNG VON RINGFÖRMIGEN FASERSTRUKTUREN, INSBESONDERE FÜR DIE HERSTELLUNG VON TEILEN AUS FASERVERBUNDWERKSTOFF
METHOD FOR PRODUCING RING-SHAPED FIBROUS STRUCTURES, IN PARTICULAR FOR MAKING PARTS IN COMPOSITE MATERIAL

(30) Priorité: 28.03.1997 FR 9703833
(43) Date de publication de la demande: 12.01.2000
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: OLRY, Pierre, F-33000 Bordeaux (FR); COUPE, Dominique, F-33165 Le Haillan (FR); LECERF, Bernard, F-33170 Gradignan (FR); GUIRMAN, Jean-Michel, F-33130 Begles (FR)
(74) Mandataire: Joly, Jean-Jacques
(86) Numéro de dépôt international: FR9800598
(87) Numéro de publication internationale: WO9844182

(56) Documents cités:
- EP-A- 0 528 336
- EP-A- 0 721 835
- WO-A-97/20092
- FR-A- 2 490 687
- FR-A- 2 643 656
- GB-A- 2 268 759
- US-A- 3 000 432
- US-A- 4 677 831
- US-A- 5 173 314

## Description

La présente invention concerne un procédé pour la réalisation de structures fibreuses annulaires, en particulier des préformes destinées à la fabrication de pièces annulaires en matériau composite.

Un domaine particulier, mais non exclusif, d'application de l'invention est la réalisation de préformes annulaires pour la fabrication de disques de frein ou d'embrayage en matériau composite, notamment en matériau composite carbone-carbone (C/C).

Des pièces annulaires en matériau composite, telles que des disques de frein ou d'embrayage, sont constituées d'une structure fibreuse de renfort, ou préforme, densifiée par une matrice. Pour des disques en composite C/C, la préforme est en fibres de carbone ou en fibres d'un précurseur de carbone qui est transformé en carbone par traitement thermique après réalisation de la préforme. Un précurseur de carbone disponible sous forme de fibres est notamment le polyacrylonitrile (PAN) préoxydé. La densification de la préforme peut être réalisée par voie liquide-imprégnation par un précurseur liquide de carbone, par exemple une résine, et transformation du précurseur par traitement thermique - ou par infiltration chimique en phase vapeur, ou encore par caléfaction. Dans ce dernier cas, la préforme est immergée dans un liquide précurseur de la matrice et la préforme est chauffée par exemple par contact avec un induit ou par couplage direct avec un inducteur, de sorte que le précurseur est vaporisé au contact de la préforme et peut s'infiltrer pour former la matrice par dépôt au sein de la porosité de la préforme.

Un procédé bien connu pour réaliser des préformes fibreuses de pièces en matériau composite consiste à superposer et à aiguilleter des couches ou strates d'une texture fibreuse bidimensionnelle. La texture fibreuse est par exemple un tissu. Le tissu est éventuellement recouvert d'un voile de fibres qui procure les fibres susceptibles d'être déplacées par les aiguilles à travers les strates superposées ; il en est ainsi en particulier lorsque le tissu est en fibres difficilement aiguilletables sans être cassées, notamment en fibres de carbone. Un tel procédé est décrit notamment dans les documents FR-A-2 584 106 et FR-A-2 584 107 respectivement pour la réalisation de préformes planes et pour la réalisation de préformes de révolution.

Une préforme annulaire pour un disque peut être découpée dans une plaque épaisse formée de couches superposées à plat et aiguilletées. La perte de matière est de près de 50 % ce qui, dans le cas de préformes en fibres de carbone ou en fibres de précurseur de carbone, représente un coût très important.

Afin de réduire cette perte, il a été proposé dans le document EP-A-0 232 059 de réaliser la préforme en superposant et en aiguilletant des couches annulaires formées chacune de plusieurs secteurs assemblés. Les secteurs sont découpés dans une texture bidimensionnelle. La perte de matière est moindre que dans le cas de la découpe d'anneaux entiers, mais reste non négligeable. En outre, le procédé est assez délicat à mettre en oeuvre et à automatiser, notamment en raison de la nécessité de positionner correctement les secteurs tout en les décalant d'une couche à l'autre afin de ne pas superposer les lignes de séparation entre secteurs.

Il pourrait être envisagé de découper des préformes annulaires dans des manchons réalisés par enroulement dans un mandrin et aiguilletage simultané d'une bande de tissu, comme décrit dans le document précité FR-A-2 584 107. Le procédé est relativement aisé à mettre en oeuvre, sans perte substantielle de matière fibreuse. Toutefois, dans l'application aux disques de friction, et contrairement aux autres modes de réalisation décrits plus haut, les strates de la préforme sont alors disposées perpendiculairement aux faces frottantes, ce qui n'est pas une configuration optimale dans certains cas.

Une autre technique connue pour la réalisation de préformes fibreuses pour des pièces annulaires en matériau composite consiste à utiliser un produit textile en bande de forme spirale ou hélicoïdale qui est enroulée à plat en spires superposées. Le produit textile peut être un tissu formé de fils de chaîne hélicoïdaux et de fils de trame radiaux.

Comme décrit dans les documents FR-A-2 490 687 et FR-A-2 643 656, la forme spirale ou hélicoïdale est donnée au tissu en appelant au moyen d'un rouleau tronconique des fils de chaîne dévidés de bobines individuelles montées sur un cantre. Dans un tissu ainsi réalisé, l'écartement entre les fils de trame radiaux croît sur la largeur du tissu hélicoïdal entre le diamètre intérieur et le diamètre extérieur.

Afin de conserver un caractère sensiblement homogène au tissu sur toute sa largeur, il est proposé dans les deux documents précités d'introduire des fils de trame supplémentaires qui s'étendent seulement sur une partie de la largeur du tissu, depuis le diamètre extérieur de celui-ci. Cette solution entraîne un surcoût important pour la fabrication du tissu et est source de défauts non négligeables. Une autre solution, décrite dans la demande de brevet FR 95 14 000, consiste à augmenter la masse surfacique de la chaîne du tissu hélicoïdal entre le diamètre intérieur et le diamètre extérieur afin de compenser approximativement, pour la densité volumique de la préforme, la diminution de la densité de trame. Bien que moins coûteuse que l'augmentation de la densité des fils de trame en direction du diamètre extérieur, cette solution reste assez complexe car elle nécessite l'utilisation de fils de chaîne de titre variable et/ou de masse surfacique variable entre le diamètre intérieur et le diamètre extérieur du tissu.

Selon encore une autre technique connue, des préformes fibreuses pour des pièces annulaires en matériau composite, en particulier pour des disques de frein, sont réalisées par enroulement en hélice de tresses tubulaires aplaties. Les tresses tubulaires peuvent être droites, comme décrit dans le document EP-A-0 528 336. Les tresses sont alors déformées pour être enroulées en hélice. Des fils longitudinaux peuvent être ajoutés au moment de la fabrication de la tresse afin d'améliorer la stabilité dimensionnelle de la préforme, et de compenser la variation de densité surfacique entre le diamètre interne et le diamètre externe de la tresse aplatie enroulée. Il a aussi été proposé d'utiliser des tresses tubulaires hélicoïdales dans le document EP-A-0 683 261. Cela permet de s'affranchir des limites de déformabilité des tresses tubulaires droites lorsqu'elles sont enroulées en hélice. Toutefois, la variation de densité surfacique doit toujours être compensée en ajoutant des fils longitudinaux ou en juxtaposant plusieurs tresses aplaties de petites largeurs entre le diamètre interne et le diamètre externe. Ces solutions rendent la fabrication des préformes relativement complexe, donc coûteuse, sans résoudre le problème de la variation de densité surfacique de façon complètement satisfaisante.

Aussi, un objet de la présente invention est de fournir un procédé qui permette de réaliser des préformes annulaires pour des pièces en matériau composite sans entraîner de chutes substantielles de matière et en conservant une densité surfacique sensiblement constante entre le diamètre intérieur et le diamètre extérieur des structures.

Un autre objet de la présente invention est de fournir un tel procédé dont le coût de mise en oeuvre soit sensiblement inférieur à celui des procédés de l'état de la technique capables de procurer des résultats similaires.

A cet effet, il est proposé un procédé d'élaboration d'une structure fibreuse annulaire par bobinage en hélice à plat d'une texture fibreuse en forme de bande déformable, le procédé comprenant les étapes qui consistent à :
- fournir une texture fibreuse en forme de bande déformable formée de deux nappes unidirectionnelles superposées, chacune constituée d'éléments fibreux parallèles les uns aux autres, les directions des deux nappes faisant des angles de signes opposés avec la direction longitudinale de la bande, et les deux nappes étant liées entre elles de manière à former des mailles élémentaires déformables,
- enrouler la texture en forme de bande en la déformant par modification de la géométrie des mailles élémentaires, pour la transformer en hélice à plat, les mailles élémentaires se déformant avec variation de leur dimension radiale de façon croissante en direction du diamètre intérieur des spires, de sorte que la variation de masse surfacique entre les diamètres intérieur et extérieur des spires peut être minimisée, et
- appliquer les unes contre les autres les spires à plat déformées par l'enroulement de la texture en hélice, de manière à obtenir une structure fibreuse annulaire.

Avantageusement, les directions des deux nappes font avec la direction longitudinale de la bande des angles de valeur absolue comprise de préférence entre 30° et 60°, afin de ménager une capacité de déformation des mailles élémentaires en direction longitudinale et en direction transversale. Selon un mode de réalisation préféré, ces angles sont égaux à +45° et -45°. La liaison des nappes entre elles est réalisée en préservant la possibilité de déformation des mailles élémentaires à leurs sommets, par exemple par couture ou par tricotage au moyen de fils passant d'une face à l'autre de la texture, ou encore par pré-aiguilletage ou aiguilletage localisé.

Une telle texture est particulièrement avantageuse par sa capacité de déformation lui permettant d'être enroulée en hélice à plat sans former de surépaisseurs ou ondulations de surface et avec une répartition sensiblement uniforme des éléments fibreux des nappes conférant à l'hélice une densité surfacique dont la variation entre ses diamètres intérieur et extérieur peut rester dans des limites acceptables, sans qu'il soit nécessaire de la compenser.

Avantageusement encore, les spires superposées à plat formées par enroulement de la texture en hélice sont liées entre elles. La liaison entre les spires est par exemple effectuée par aiguilletage. L'aiguilletage peut être réalisé après enroulement et éventuellement compression de la structure annulaire, ou au cours de l'enroulement.

La déformation de la texture en forme de bande peut être réalisée par passage entre deux disques rotatifs avec maintien de la texture entre les disques, par exemple par serrage, le long de ses bords longitudinaux, ou par appel sur au moins un rouleau tronconique.

Ainsi, il est possible de former une structure fibreuse annulaire sans chute de matière fibreuse et en conservant une densité fibreuse faiblement variable entre le diamètre intérieur et le diamètre extérieur sans introduction d'éléments supplémentaires comme dans des procédés de l'art antérieur, donc avec une mise en oeuvre très simplifiée.

L'invention sera mieux comprise à la lecture de la description faite ci-après, à titre indicatif mais non limitatif, en référence aux dessins annexés, sur lesquels :
- la figure 1 est une vue très schématique d'une installation permettant la réalisation d'une texture fibreuse en forme de bande déformable utilisable pour la mise en oeuvre d'un procédé conforme à l'invention ;
- les figures 2, 3A, 3B et 3C sont des vues illustrant la réalisation d'une liaison par tricotage d'une texture fibreuse utilisable pour la mise en oeuvre d'un procédé conforme à l'invention ;
- les figures 4, SA, 5B et 5C sont des vues illustrant la réalisation d'une autre liaison par tricotage d'une texture fibreuse utilisable pour la mise en oeuvre d'un procédé conforme à l'invention ;
- la figure 6 est une vue schématique de détail qui montre comment une texture fibreuse, telle que celle réalisée au moyen de l'installation de la figure 1, se déforme lorsqu'elle est enroulée à plat en hélice ;
- les figures 7A et 7B sont des vues schématiques illustrant un dispositif d'enroulement en hélice d'une texture fibreuse pour la mise en oeuvre d'un procédé conforme à l'invention ;
- les figures 8A et 8B sont des vues schématiques illustrant deux autres dispositifs d'enroulement en hélice d'une texture fibreuse pour la mise en oeuvre d'un procédé conforme à l'invention ;
- la figure 9 est une vue schématique illustrant un mode de mise en oeuvre d'un procédé de réalisation d'une structure fibreuse annulaire conformément à l'invention ; et
- la figure 10 est une vue schématique illustrant un autre mode de mise en oeuvre d'un procédé de réalisation d'une structure fibreuse annulaire conformément à l'invention.

La texture fibreuse utilisée dans un procédé conforme à l'invention est formée par superposition et liage de deux nappes unidirectionnelles constituées d'éléments fibreux parallèles les uns aux autres.

De façon bien connue, une nappe unidirectionnelle peut être obtenue par étalement-nappage d'un câble ou, comme envisagé dans la description détaillée ci-après, par mise en parallèle de fils provenant de bobines différentes.

On notera qu'un procédé de réalisation d'une texture fibreuse multi-axiale à partir de nappes unidirectionnelles obtenues par étalement de câbles est décrit dans la demande de brevet français déposée le 28 mars 1997 sous le N° 97 03 832 et intitulée "Procédé et machine pour la réalisation de nappes fibreuses multiaxiales", dont le contenu est incorporé ici par référence.

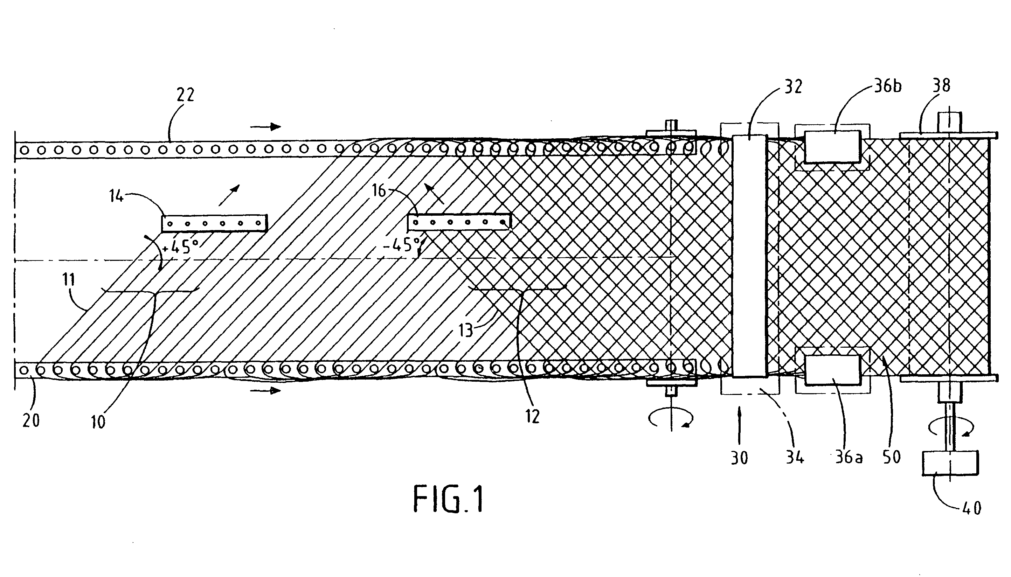

La figure 1 montre très schématiquement une installation recevant deux nappes unidirectionnelles 10, 12 formées de fils et produisant une texture en forme de bande par superposition de deux nappes faisant avec la direction longitudinale de la bande des angles de signes opposés, dans l'exemple illustré des angles égaux à +45° et -45°.

Les fibres constitutives des nappes unidirectionnelles 10, 12 sont en une matière choisie en fonction de l'utilisation envisagée pour la texture en forme de bande. Il peut s'agir de fibres organiques ou minérales, par exemple des fibres de carbone ou de céramique, ou de précurseur de carbone ou céramique. On notera que les fibres constitutives des deux nappes peuvent être de natures différentes. Il est même possible d'utiliser des fibres de natures différentes dans chaque nappe.

La bande est formée en amenant des segments successifs de la nappe 10 faisant un angle de +45° par rapport à la direction longitudinale de la bande à réaliser, et en juxtaposant ces segments dans cette direction. Chaque segment est amené sur une longueur telle qu'il s'étende d'un bord longitudinal de la bande à l'autre bord longitudinal. De façon similaire, des segments successifs de la nappe 12 sont amenés en faisant un angle de -45° par rapport à la direction longitudinale de la bande à réaliser et sont juxtaposés, les segments de nappe 12 étant disposés au-dessus des segments de nappe 10.

Dans l'exemple illustré, les fils 11, 13 constitutifs de chaque nappe 10, 12, sont tendus entre deux chaînes sans fin à picots 20, 22 mues en synchronisme. Les extrémités des nappes 10, 12 sont guidées par des chariots, respectivement 14, 16 recevant les fils 11, 13 de bobines respectives (non représentées) et animés d'un mouvement de va-et-vient entre les bords longitudinaux de la bande à réaliser. A chaque extrémité de course des chariots, les nappes sont retournées autour de picots de la chaîne à picots correspondante. L'avance des chaînes à picots 20, 22 est commandée de façon continue ou discontinue, en relation avec l'amenée des nappes 10, 12, de manière à juxtaposer les segments de nappes successifs. Une installation de ce type est connue, par exemple du document US-A-4 677 831, de sorte qu'une description plus détaillée n'est pas nécessaire.

La bande formée par superposition des nappes 10, 12 est prélevée des chaînes à picots 20, 22 à l'extrémité aval de leur brin supérieur pour être admise dans un dispositif de liage 30. Dans l'exemple illustré, le liage est réalisé par aiguilletage au moyen d'une planche à aiguilles 32 qui s'étend sur toute la longueur de la bande en formation, celle-ci passant au-dessus d'une plaque perforée 34 dont les perforations sont situées au droit des aiguilles de la planche 32. La répartition des aiguilles sur la planche à aiguilles 32 est déterminée pour effectuer un aiguilletage localisé de sorte que le liage des deux nappes définit des mailles élémentaires déformables par exemple à la manière de parallélogrammes.

Le liage entre les nappes confère à la texture fibreuse en forme de bande 50 obtenue une cohésion suffisante pour être stockée sur un rouleau 38 entraîné par un moteur 40 en synchronisme avec les chaînes à picots 20, 22. Entre le dispositif de liage 30 et le rouleau 38, les bords de la bande 50 sont coupés au moyen de molettes rotatives 36a, 36b.

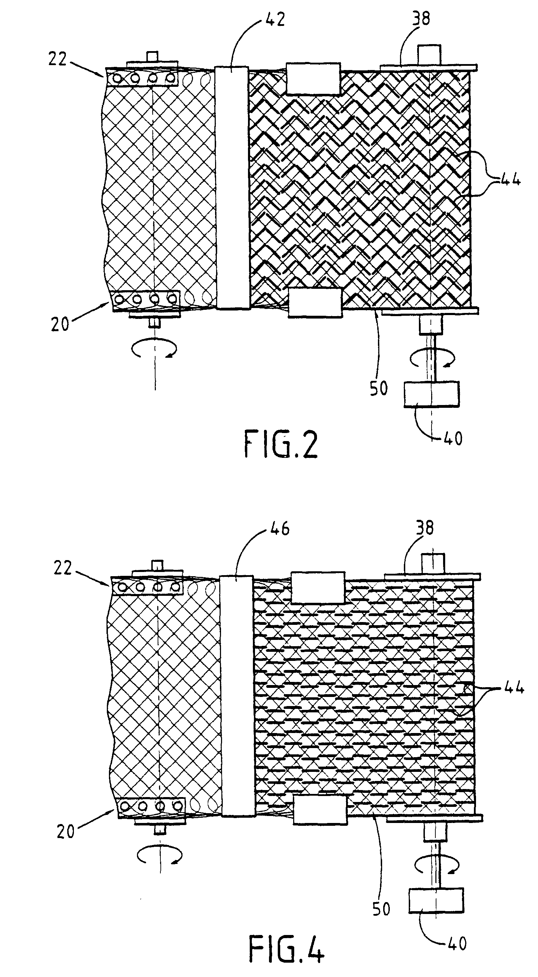

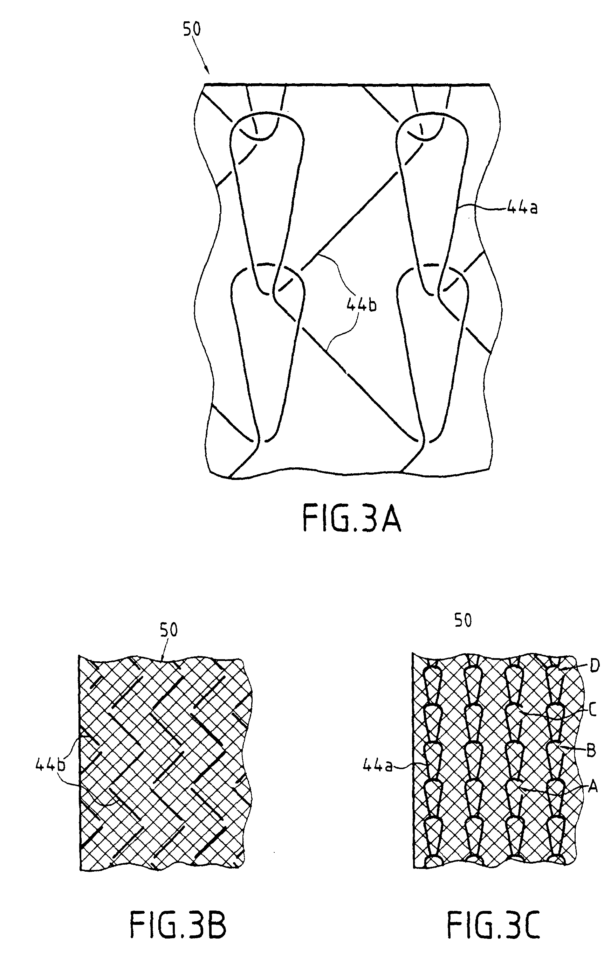

Les figures 2, 3A et 3B illustrent une variante préférée de réalisation du liage des nappes. Selon cette variante, le liage est réalisé non pas par aiguilletage mais par tricotage. Les nappes superposées prélevées des chaînes à picots 20, 22 sont reçues par un dispositif de tricotage 42 qui réalise un tricot, c'est-à-dire une structure bidimensionnelle, au moyen d'un fil passant d'une face à l'autre de la texture 50 (figure 2). La figure 3A montre de façon détaillée le point de tricot utilisé 44, tandis que les figures 3B et 3C montrent les faces endroit et envers de la texture 50 liée par tricotage.

Comme le montre la figure 3A, le point de tricot forme des boucles 44a entrelacées, allongées dans la direction longitudinale de la texture 50 en formant plusieurs rangées parallèles, et des trajets en V ou en zig-zag 44b qui relient les boucles entre rangées voisines. La texture 50 est située entre les trajets 44b situés sur la face endroit (figure 3B) et les boucles 44a situées sur la face envers (figure 3C), donnant au tricot l'apparence d'un point zig-zag sur une face et d'un point chaînette sur l'autre face. Le point de tricot englobe plusieurs fils de chaque nappe, selon la jauge choisie.

Les points de liaison entre les trajets 44b en zig-zag et les boucles 44a, tels que les points A, B, C, D des figures 3B et 3C, définissent des sommets de mailles élémentaires déformables. C'est-à-dire, dans ce cas, que sont déformables à la fois les mailles définies par le point de tricot, et des mailles définies par des points de croisement entre fils des nappes et formant des parallélogrammes déformables.

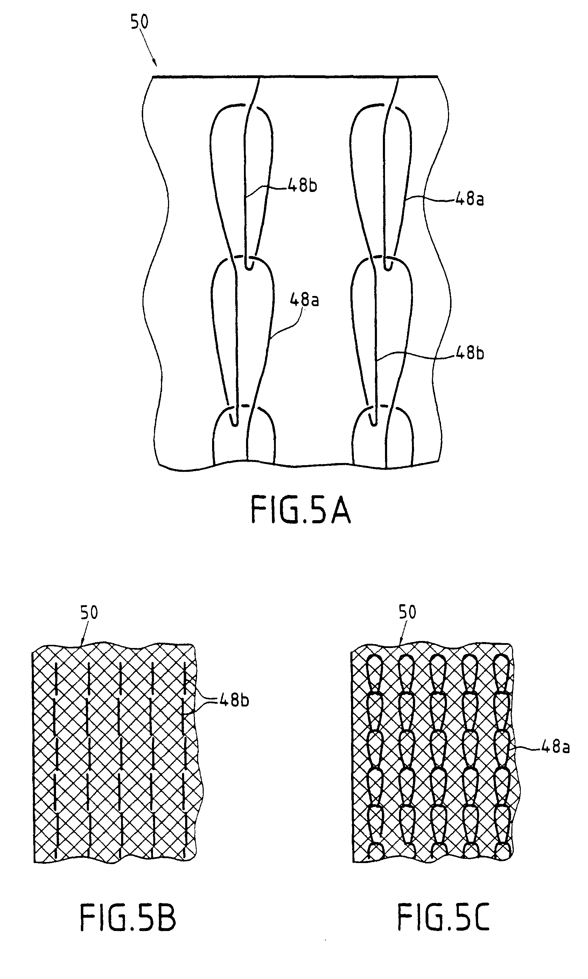

La figure 4 illustre une autre variante selon laquelle la liaison entre les nappes est aussi réalisée par tricotage. Les nappes superposées prélevées des chaînes à picots 20, 22 sont reçues par un dispositif de tricotage 46 qui lie les nappes suivant plusieurs lignes parallèles aux bords longitudinaux de la texture 50.

Comme le montre la figure 8A, le point de tricot 48 est un point de chaînette avec des boucles 48a liées par des segments rectilignes 48b, la texture 50 est située entre les segments 48b, visibles sur la face endroit de la texture (figure 5B) et les boucles 48a, visibles sur la face envers (figure 5C).

Le fil de tricotage pour les modes de réalisation des figures 2 et 4 peut être en un matériau fugitif, c'est-à-dire un matériau susceptible d'être éliminé ultérieurement sans endommager les fibres constitutives des nappes. On pourra par exemple utiliser des fils en un matériau susceptible d'être éliminé par la chaleur sans laisser de résidu, ou des fils en un matériau susceptible d'être éliminé par un solvant, par exemple des fils en alcool polyvinylique solubles dans l'eau.

Il est également possible d'utiliser un fil de tricotage en un matériau compatible avec l'utilisation ultérieure envisagée pour la texture. Lorsque celle-ci est destinée à l'élaboration de préformes pour la fabrication de pièces en matériau composite, le fil de tricotage ou couture pourra être réalisé en une matière compatible avec la matière de la matrice du matériau composite, c'est-à-dire de préférence de même nature ou miscible dans la matrice sans réagir chimiquement avec celle-ci.

D'autres modes de liaison par tricotage ou aussi par couture pourront être choisis.

La texture en forme de bande obtenue est particulièrement avantageuse en raison de sa capacité de déformation lui permettant d'être enroulée en hélice à plat sans entraîner de déformation de surface (glissements ou ondulations), ceci du fait que les mailles élémentaires 52 de la texture 50 se comportent comme des parallélogrammes déformables dont la déformation n'est pas entravée par le mode de liage choisi, le mode de liaison par tricotage illustré par les figures 2, 3A, 3B et 3C étant à cet égard préféré.

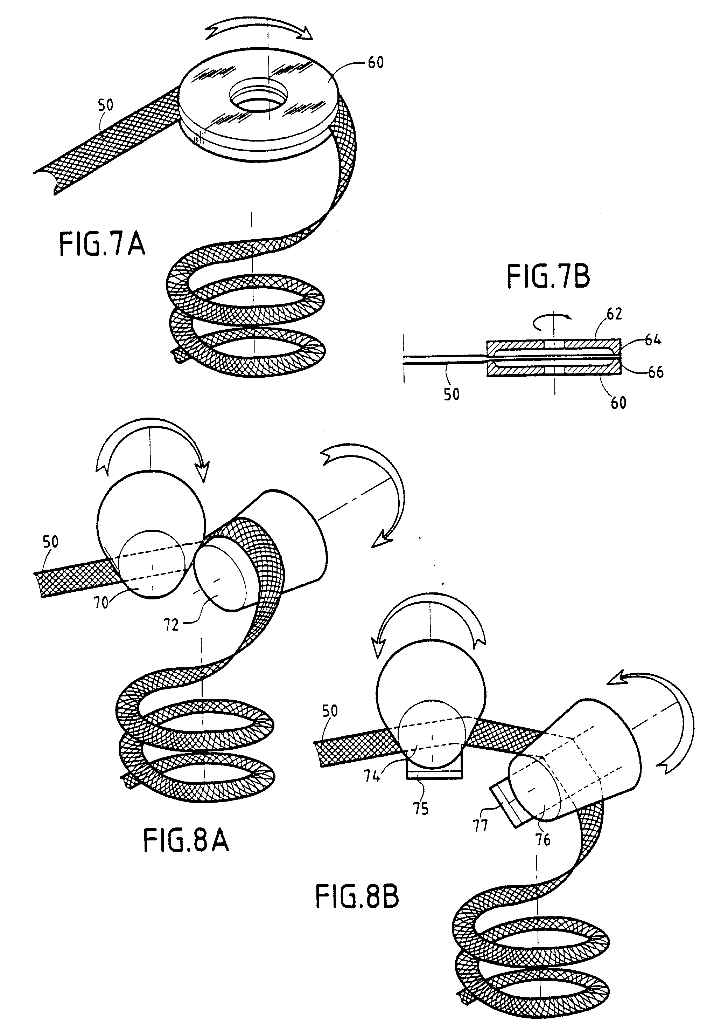

Lors de l'enroulement (figure 6), les mailles élémentaires 52' situées au voisinage du diamètre intérieur de l'hélice en cours de formation se déforment par allongement en direction radiale et rétrécissement en direction longitudinale, tandis que les mailles élémentaires 52" situées au voisinage du diamètre extérieur de l'hélice se déforment par rétrécissement en direction radiale et allongement en direction longitudinale. Il en résulte que la densité surfacique de fibres reste sensiblement constante ou faiblement variable entre le diamètre intérieur et le diamètre extérieur, ce qui est particulièrement avantageux pour élaborer des préformes homogènes destinées à la fabrication de pièces en matériau composite. Sur la figure 6 le trait mixte 54 montre la déformation de l'une des directions initiales de la bande 50.

Dans le cas du liage par tricotage ou par couture, la déformation des mailles élémentaires formées par les fils de la texture s'accompagne d'une déformation des points de tricot ou de couture. Ainsi, pour le point de tricot des figures 3A à 3C, la déformation se traduit par un allongement ou un raccourcissement des parties du fil formant les boucles des chaînettes et par une ouverture ou une fermeture des angles que forment les trajets en zig-zag.

L'enroulement avec déformation de la texture 50 en hélice à plat peut être réalisé en faisant passer la texture entre deux disques ou flasques annulaires 60, 62 tout en maintenant la texture entre les disques le long de ses bords longitudinaux (figure 7A). Le maintien de la texture est par exemple réalisé par serrage de ses bords entre des nervures circulaires 64, 66 formées sur les faces internes des disques 60, 62, ou au moins sur la face interne de l'un des disques (figure 7B).

Selon un autre mode de réalisation, l'enroulement avec déformation de la texture est réalisé en faisant passer celle-ci sur au moins un rouleau tronconique. Le nombre de rouleaux et leurs angles au sommet sont choisis en fonction du degré de déformation souhaité. Dans l'exemple illustré par la figure 8A, on utilise deux rouleaux tronconiques identiques 70, 72 qui sont entraînés en rotation par des moteurs respectifs (non représentés). On oblige la texture à épouser une partie de la périphérie d'au moins l'un des rouleaux.

Dans l'exemple de la figure 8B, on oblige la texture à passer entre un premier rouleau tronconique rotatif 74 et une plaque lisse d'appui 75 et entre un deuxième rouleau tronconique rotatif 76 et une plaque d'appui lisse 77. Les rouleaux, entraînés en rotation par des moteurs respectifs (non représentés) déforment la texture par friction.

On pourrait utiliser un seul rouleau tronconique contre lequel la texture est appliquée. Dans ce cas, le plus petit cercle décrit par un bord de la texture sur le rouleau tronconique définit le diamètre intérieur de l'hélice.

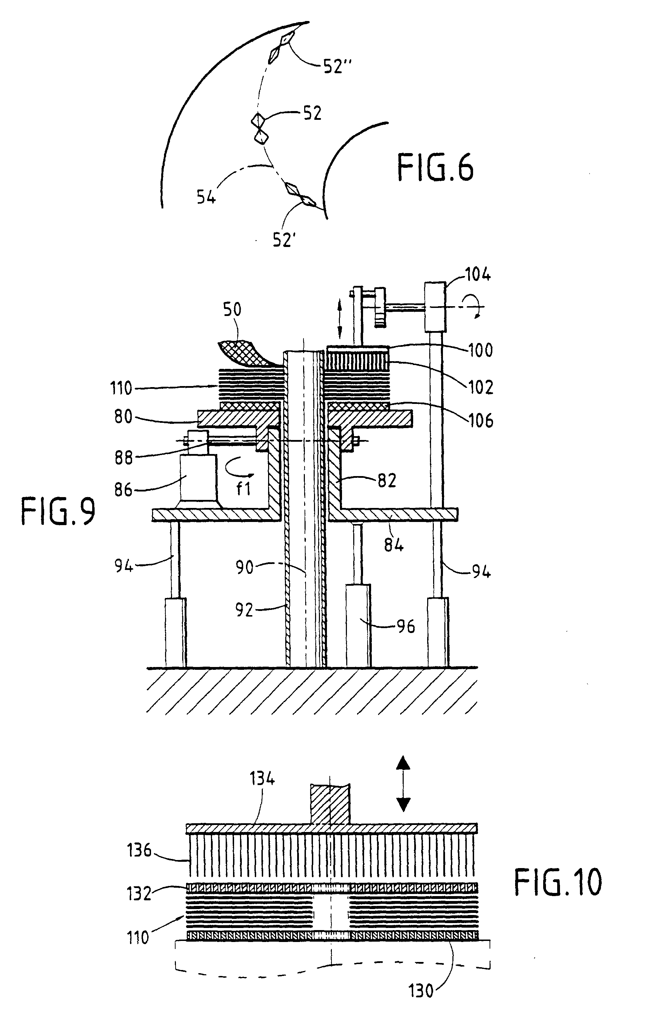

Une structure fibreuse annulaire peut être élaborée par superposition à plat des spires formées par l'enroulement en hélice de la texture 50 et liaison des spires entre elles par aiguilletage au fur et à mesure de l'enroulement (figure 9). Cela peut être réalisé dans la continuité de la déformation de la texture fibreuse en hélice à plat ou après stockage intermédiaire de celle-ci.

La texture 50 déformée, par exemple par passage entre deux disques, comme dans le cas de la figure 5, est enroulée en spires superposées à plat sur une platine tournante 80. La platine 80 est montée sur un axe vertical 82 solidaire d'un support 84. Le support 84 porte en outre un moteur 86 qui entraîne la platine 80 en rotation autour de son axe vertical 90 (flèche f1), par l'intermédiaire d'une courroie 88.

L'ensemble comprenant le support 84 et la platine 80 est mobile verticalement le long d'un tube de guidage central fixe 92 d'axe 90. A son extrémité supérieure, le tube 92 supporte le dispositif de déformation de la bande en hélice. Le support 84 repose sur des tiges télescopiques verticales 94, le déplacement vertical du support 84 étant commandé par un ou plusieurs vérins 96.

Au fur et à mesure de son enroulement à plat sur la platine tournante 80, la bande 50 est aiguilletée au moyen d'une planche 100 portant des aiguilles 102 et animée d'un mouvement vertical alternatif. Le mouvement de la planche à aiguilles est commandé par un moteur 104, par l'intermédiaire d'une transmission de type bielle-manivelle. Le moteur 104 est porté par le support 84.

L'aiguilletage de la bande 50 est réalisé avec une densité surfacique et une profondeur sensiblement constantes. Pour obtenir une densité de coups d'aiguilles 102 constante sur toute la surface d'une spire annulaire de bande 50, la planche à aiguilles 100 a une forme de secteur, correspondant à un secteur d'une couche annulaire de tissu, secteur sur lequel les aiguilles sont réparties uniformément, tandis que la platine 80 supportant la structure 110 en cours d'élaboration est entraînée en rotation à vitesse constante.

La profondeur d'aiguilletage, c'est-à-dire la distance sur laquelle les aiguilles 102 pénètrent à chaque fois dans la structure 110, est maintenue sensiblement constante, et égale par exemple à l'épaisseur formée par quelques couches de tissu superposées. A cet effet, au fur et à mesure du bobinage de la bande 50 sur la platine 80, celle-ci est déplacée verticalement vers le bas de la distance voulue pour que la position relative entre la surface de la préforme et la planche à aiguilles, à une extrémité de sa course verticale, reste inchangée. A la fin de la réalisation de la préforme 110, après mise en place de la dernière spire de bande 50, plusieurs passes d'aiguilletage sont réalisées en continuant à faire tourner la platine 80 de manière que la densité volumique d'aiguilletage dans les couches de tissu superficielles soit sensiblement la même que dans le reste de la préforme. Au cours d'une partie au moins de ces passes finales d'aiguilletage, un abaissement progressif de la platine 80 pourra être commandé, comme lors des phases précédentes. Ce principe d'aiguilletage à profondeur constante par abaissement progressif du support de la préforme et avec passes finales d'aiguilletage est connu et décrit notamment dans le document FR-A-2 584 106 déjà cité. En outre, la platine 80 est revêtue d'une couche de protection 106 dans laquelle les aiguilles peuvent pénétrer sans être endommagées lors de l'aiguilletage des premières spires de bande 50. La couche de protection 106 peut être formée d'un feutre d'embase, par exemple un feutre de polypropylène, recouvert d'une feuille de matière plastique, par exemple en polychlorure de vinyle qui évite, à la remontée des aiguilles, d'entraîner dans la préforme 110, des fibres prélevées dans le feutre d'embase.

Dans un autre mode de réalisation de la structure fibreuse 110, les spires formées par enroulement en hélice de la texture déformée sont appliquées les unes contre les autres et la structure fibreuse est comprimée au moyen d'un outillage comprenant une plaque de base 130 et une plaque supérieure 132 (figure 10). La compression est réalisée de manière à obtenir un taux volumique de fibres désiré. Les spires peuvent alors être liées entre elles par aiguilletage au moyen d'une planche à aiguilles 134 dont les aiguilles 136 passent à travers des perforations de la plaque supérieure 132 et pénètrent dans toute l'épaisseur de la structure 110. Des perforations peuvent être formées également dans la plaque de base 130 au droit des aiguilles.

Une structure fibreuse annulaire obtenue comme décrit ci-dessus est utilisable comme préforme pour la fabrication d'une pièce annulaire en matériau composite, par exemple un disque de frein.

Lorsque le liage des nappes unidirectionnelles a été réalisé par un fil en matière fugitive, l'élimination du fil est effectuée par dissolution ou traitement thermique avant densification de la préforme.

Lorsque la matière constitutive des fibres de la structure fibreuse obtenue est un précurseur de celle du renfort fibreux du matériau composite, la transformation du précurseur est effectuée avant densification de la préforme, ou au cours de la montée en température précédant la densification.

La densification de la préforme est effectuée de façon connue par voie liquide ou par infiltration chimique en phase vapeur afin de former au sein de la porosité accessible de la préforme un dépôt du matériau constitutif de la matière désirée.

Bien que l'on ait envisagé l'utilisation d'une texture fibreuse déformable constituée de deux nappes unidirectionnelles liées formant des angles de +45° et -45° par rapport à la direction longitudinale de la bande, on comprendra que le procédé selon l'invention peut être mis en oeuvre avec des bandes déformables dans lesquelles les deux nappes unidirectionnelles font des angles de signes opposés dont les valeurs absolues peuvent être différentes de 45° et éventuellement différentes l'une de l'autre. De préférence toutefois, afin de conserver une capacité suffisante de déformation des mailles élémentaires, ces angles ont une valeur absolue comprise entre 30° et 60° et de préférence aussi, ces angles ont même valeur absolue afin de conserver un caractère de symétrie à la bande déformable.

En outre, il est envisagé dans ce qui précède l'enroulement en hélice à plat de la bande fibreuse telle qu'obtenue en sortie de l'installation de nappage de la figure 1. En variante, et même de façon préférentielle, lorsque la dimension radiale des préformes annulaires à réaliser n'est pas trop importante, la bande fibreuse obtenue en sortie de l'installation de nappage est partagée en plusieurs bandes déformables ayant ou non même largeur, par découpe parallèlement à la direction longitudinale.

## Revendications

1. Procédé d'élaboration d'une structure fibreuse annulaire par bobinage en hélice à plat d'une texture fibreuse en forme de bande déformable, **caractérisé en ce qu'**il comprend les étapes consistant à :
- fournir une texture fibreuse en forme de bande déformable formée de deux nappes unidirectionnelles superposées, chacune constituée d'éléments fibreux parallèles les uns aux autres, les directions des deux nappes faisant des angles de signes opposés avec la direction longitudinale de la bande, et les deux nappes étant liées entre elles de manière à former des mailles élémentaires déformables,
- enrouler la texture en forme de bande en la déformant par modification de la géométrie des mailles élémentaires, pour la transformer en hélice à plat, les mailles élémentaires se déformant avec variation de leur dimension radiale de façon croissante en direction du diamètre intérieur des spires, de sorte que la variation de masse surfacique entre les diamètres intérieur et extérieur des spires peut être minimisée, et
- appliquer les unes contre les autres les spires à plat déformées par l'enroulement de la texture en hélice, de manière à obtenir une structure fibreuse annulaire.

2. Procédé selon la revendication 1, **caractérisé en ce que** l'on fournit une bande déformable dans laquelle les directions des deux nappes font avec la direction longitudinale de la bande des angles de même valeur absolue.

3. Procédé selon l'une quelconque des revendications 1 et 2, **caractérisé en ce que** l'on fournit une bande déformable dans laquelle les directions des deux nappes font avec la direction longitudinale de la bande des angles de signes opposés et de valeur absolue comprise entre 30° et 60°.

4. Procédé selon l'une quelconque des revendications 1 à 3, **caractérisé en ce que** l'on fournit une bande déformable dans laquelle les directions des deux nappes font avec la direction longitudinale de la bande des angles égaux à +45° et -45°.

5. Procédé selon l'une quelconque des revendications 1 à 4, **caractérisé en ce que** l'on fournit une bande déformable dans laquelle les nappes sont liées entre elles par tricotage.

6. Procédé selon la revendication 5, **caractérisé en ce que** l'on fournit une bande déformable dans laquelle les nappes sont liées entre elles par tricotage avec un point de tricot formant un zig-zag sur une face et une chaînette sur la face opposée.

7. Procédé selon l'une quelconque des revendications 1 et 4, **caractérisé en ce que** l'on fournit une bande déformable dans laquelle les nappes sont liées entre elles par couture.

8. Procédé selon l'une quelconque des revendications 5 à 7, **caractérisé en ce que** les nappes sont liées entre elles par un fil en matière fugitive.

9. Procédé selon l'une quelconque des revendications 1 à 4, **caractérisé en ce que** l'on fournit une bande déformable dans laquelle les nappes sont liées entre elles par aiguilletage.

10. Procédé selon l'une quelconque des revendications 1 à 9, **caractérisé en ce que** les spires superposées à plat formées par enroulement de la texture en hélice sont liées les unes aux autres.

11. Procédé selon la revendication 10, **caractérisé en ce que** la liaison entre les spires superposées est réalisée par aiguilletage.

12. Procédé selon la revendication 11, **caractérisé en ce que** l'aiguilletage est réalisé au fur et à mesure de l'enroulement de la texture en hélice.

13. Procédé selon l'une quelconque des revendications 1 à 12, **caractérisé en ce que** la déformation de la texture en forme de bande est réalisée par passage entre deux disques rotatifs entre lesquels la texture est maintenue le long de ses bords longitudinaux.

14. Procédé selon la revendication 13, **caractérisé en ce que** la texture est serrée le long de ses bords longitudinaux entre les disques.

15. Procédé selon l'une quelconque des revendications 1 à 12, **caractérisé en ce que** la déformation de la texture en forme de bande est réalisée par appel sur au moins un rouleau tronconique.

16. Procédé selon l'une quelconque des revendications 1 à 15, **caractérisé en ce que** la texture en forme de bande déformable est fournie par découpe longitudinale d'une bande de plus grande largeur.

## Patentansprüche

1. Verfahren zur Herstellung einer ringförmigen Faserstruktur durch spiralförmiges, flaches Winden eines Fasergebildes in Gestalt eines verformbaren Bandes, **dadurch gekennzeichnet, dass** das Verfahren die folgenden Schritte aufweist:
- Bereitstellen eines Fasergebildes in Gestalt eines verformbaren Bandes, das durch zwei übereinandergelegte, unidirektionelle Gelege gebildet ist, wobei jedes aus zueinander parallelen, faserigen Elementen besteht, die Richtungen der zwei Gelege Winkel mit entgegengesetzten Vorzeichen mit der Längsrichtung des Bandes bilden und die zwei Gelege untereinander derart verbunden sind, um elementare, verformbare Maschen zu bilden,
- Winden des Gebildes in Gestalt des Bandes, indem das Gebilde durch Änderung der Geometrie der elementaren Maschen verformt wird, um es in eine flache Spirale umzuwandeln, wobei die elementaren Maschen sich mit Änderung ihrer radialen Abmessung in zunehmender Art in Richtung des Innendurchmessers der Windungen derart verformen, dass die Änderung der oberflächenbezogenen Masse zwischen dem jeweiligen Innendurchmesser und dem jeweiligen Außendurchmesser der Windungen minimiert werden kann, und
- Aneinanderanbringen der flachen Windungen, die durch das spiralförmige Winden des Gebildes verformt sind, derart, um eine ringförmige Faserstruktur zu erhalten.

2. Verfahren nach Anspruch 1,
**dadurch gekennzeichnet, dass** man ein verformbares Band bereitstellt, in dem die Richtungen der zwei Gelege mit der Längsrichtung des Bandes Winkel des gleichen Absolutwertes bilden.

3. Verfahren nach einem der Ansprüche 1 und 2,
**dadurch gekennzeichnet, dass** man ein verformbares Band bereitstellt, in dem die Richtungen der zwei Gelege mit der Längsrichtung des Bandes Winkel mit entgegengesetzten Vorzeichen und einem Absolutwert bilden, der im Bereich zwischen 30° und 60° liegt.

4. Verfahren nach einem der Ansprüche 1 bis 3,
**dadurch gekennzeichnet, dass** man ein verformbares Band bereitstellt, in dem die Richtungen der zwei Gelege mit der Längsrichtung des Bandes Winkel bilden, die gleich +45° bzw. -45° sind.

5. Verfahren nach einem der Ansprüche 1 bis 4,
**dadurch gekennzeichnet, dass** man ein verformbares Band bereitstellt, in dem die Gelege durch Stricken bzw. Wirken untereinander verbunden sind.

6. Verfahren nach Anspruch 5,
**dadurch gekennzeichnet, dass** man ein verformbares Band bereitstellt, in dem die Gelege durch Stricken bzw. Wirken mit einem Strick- bzw. Wirkstich untereinander verbunden sind, der einen Zick-Zack auf einer Seite und eine Kette auf der entgegengesetzten Seite bildet.

7. Verfahren nach einem der Ansprüche 1 und 4,
**dadurch gekennzeichnet, dass** man ein verformbares Band bereitstellt, in dem die Gelege durch Nähen untereinander verbunden sind.

8. Verfahren nach einem der Ansprüche 5 bis 7,
**dadurch gekennzeichnet, dass** die Gelege durch einen Faden aus flüchtigem Material untereinander verbunden sind.

9. Verfahren nach einem der Ansprüche 1 bis 4,
**dadurch gekennzeichnet, dass** man ein verformbares Band bereitstellt, in dem die Gelege durch Nadelung untereinander verbunden sind.

10. Verfahren nach einem der Ansprüohe 1 bis 9,
**dadurch gekennzeichnet, dass** die flach übereinandergelegten Windungen, die durch spiralförmiges Winden des Gebildes gebildet sind, miteinander verbunden werden.

11. Verfahren nach Anspruch 10,
**dadurch gekennzeichnet, dass** die Verbindung zwischen den übereinandergelegten Windungen durch Nadelung hergestellt ist.

12. Verfahren nach Anspruch 11,
**dadurch gekennzeichnet, dass** die Nadelung nach Maßgabe des spiralförmigen Windens des Gebildes durchgeführt wird.

13. Verfahren nach einem der Ansprüche 1 bis 12,
**dadurch gekennzeichnet, dass** die Verformung des Gebildes in Gestalt des Bandes durch Passage zwischen zwei drehbaren Scheiben durchgeführt wird, zwischen denen das Gebilde entlang seiner Längsränder gehalten wird.

14. Verfahren nach Anspruch 13,
**dadurch gekennzeichnet, dass** das Gebilde längs seiner Längsränder zwischen den Scheiben eingeklemmt wird.

15. Verfahren nach einem der Ansprüche 1 bis 12,
**dadurch gekennzeichnet, dass** die Verformung des Gebildes in Gestalt des Bandes durch Aufbringen auf wenigstens eine kegelstumpfartige Rolle durchgeführt wird.

16. Verfahren nach einem der Ansprüche 1 bis 15,
**dadurch gekennzeichnet, dass** das Gebilde in Gestalt des verformbaren Bandes durch Zuschneiden eines Bandes größerer Breite in Längsrichtung bereitgestellt wird.

## Claims

1. A method of making an annular fiber structure by flat helical winding of a fiber fabric in the form of a deformable strip, the method being **characterized in that** it comprises the steps consisting in:
· supplying a fiber fabric in the form of a deformable strip made up of two superposed unidirectional sheets, each constituted by mutually parallel fiber elements, the directions of the two sheets forming angles of opposite signs with the longitudinal direction of the strip, and the two sheets being bonded together so as to form deformable elementary meshes;
· winding the strip-shaped fabric while being deformed by modifying the shape of the elementary meshes so as to transform the strip into a flat helix, the elementary meshes being deformed with their radial size varying in increasing going towards the inside diameter of the turns, whereby the variation in mass per unit area between the inside and outside diameters of the turns is minimized; and
· applying against one another the flat turns deformed by the winding of the fabric into a helix so as to obtain an annular fiber structure.

2. A method according to claim 1, **characterized in that** a deformable strip is supplied in which the directions of the two sheets relative to the longitudinal direction of the strip form angles having the same absolute value.

3. A method according to claim 1 or 2, **characterized in that** a deformable strip is supplied in which the directions of the two sheets relative to the longitudinal direction of the strip form angles of opposite signs and of absolute value lying in the range 30° to 60°.

4. A method according to any one of claims 1 to 3, **characterized in that** a deformable strip is supplied in which the directions of the two sheets relative to the longitudinal direction of the strip form angles equal to +45° and to -45°C.

5. A method according to any one of claims 1 to 4, **characterized in that** a deformable strip is supplied in which the sheets are bonded together by knitting.

6. A method according to claim 5, **characterized in that** a deformable strip is supplied in which the sheets are bonded together by knitting using a knitting stitch that forms a zigzag on one face of the strip and a chain stitch on its opposite face.

7. A method according to any one of claims 1 to 4, **characterized in that** a deformable strip is supplied in which the sheets are bonded together by sewing.

8. A method according to any one of claims 5 to 7, **characterized in that** the sheets are bonded together by a thread of sacrificial material.

9. A method according to any one of claims 1 to 4, **characterized in that** a deformable strip is supplied in which the sheets are bonded together by needling.

10. A method according to any one of claims 1 to 9, **characterized in that** the superposed flat turns formed by winding the fabric helically are bonded to one another.

11. A method according to claim 10, **characterized in that** the bonding between the superposed turns is performed by needling.

12. A method according to claim 11, **characterized in that** the needling is performed progressively as the fabric is wound into a helix.

13. A method according to any one of claims 1 to 12, **characterized in that** the strip-shaped fabric is deformed by being passed between two rotary disks between which the fabric is held along its longitudinal edges.

14. A method according to claim 13, **characterized in that** the fabric is clamped along its longitudinal edges between the disks.

15. A method according to any one of claims 1 to 12, **characterized in that** the strip-shaped fabric is deformed by making use of at least one frustoconical roller.

16. A method according to any one of claims 1 to 15, **characterized in that** the deformable strip-shaped fabric is obtained by longitudinally cutting up a strip of greater width.
